# EUROPEAN PATENT APPLICATION

(11) **EP 4 838 182 A1**
(43) Date of publication of application: **11.11.2026**
(21) Application number: 25175455.2
(22) Date of filing: 09.05.2025
(51) Int. Cl.: G01F 22/00, G01F 23/284, G01F 23/292, G01S 13/88, G01S 17/88, G06T 7/62

(54) **ESTIMATING AN AMOUNT OF SOLID PRODUCT IN A TANK**

(71) Applicant: Rosemount Tank Radar AB, 435 23 Mölnlycke (SE)
(72) Inventor: GRAHN, Marcus, 582 76 LINKÖPING (SE)
(74) Representative: Kransell & Wennborg KB

(57) **Abstract**

A method of estimating an amount of solid product (5) in a tank (3), comprising: performing (S31) a plurality of distance measurement operations for measuring a plurality of distances (dn) to a surface (7) of the solid product (5) in different directions (rn) in relation to a distance measurement sensor (13); identifying (S32), based on the plurality of distances (dn), at least one peak (11a-c) formed by the surface (7); estimating (S33), based on the plurality of distances (dn), a height (ha-hc) over a reference level (12) of the tank (3) of the at least one identified peak (11a-c); estimating (S34), based on the height (ha-hc) and the plurality of distances (dn), a volume (Va-Vc) of solid product (5) associated with the at least one identified peak (11a-c); and estimating (S35) the amount of solid product (5) in the tank (3) based on the volume (Va-Vc) associated with each identified peak (11a-c).

## Description

### Technical Field of the Invention

The present invention relates to a method and system for estimating an amount of solid product in a tank.

### Technical Background

Accurately estimating the amount of solid product in a tank is challenging when the surface of the solid product is irregular or non-uniform. When a distance measurement sensor is mounted at a fixed position, parts of the surface may be obstructed, which may cause an estimation of the amount of solid product in the tank that is either incorrect or has a large margin of error.

It would be desirable to provide for improved estimation of the amount of solid product in a tank, in particular using a distance measurement sensor mounted at a fixed position.

### Summary

In view of the above, a general object of the present invention is to provide for improved estimation of the amount of solid product in a tank, in particular using a distance measurement sensor mounted at a fixed position.

According to a first aspect of the present invention, it is provided a method of estimating an amount of solid product in a tank, comprising: performing a plurality of distance measurement operations for measuring a plurality of distances to a surface of the solid product in different directions in relation to a distance measurement sensor; identifying, based on the plurality of distances to the surface of the solid product in different directions, at least one peak formed by the surface of the solid product; estimating, based on the plurality of distances to the surface of the solid product in different directions, a height over a reference level of the tank of the at least one identified peak; estimating, based on the height of the at least one identified peak and the plurality of distances to the surface of the solid product in different directions, a volume of solid product associated with the at least one identified peak; and estimating the amount of solid product in the tank based on the volume of solid product associated with each identified peak.

The present invention is based upon the realization that an amount of solid product in a tank can be more accurately estimated by identifying and evaluating one or more peaks formed by the surface of the solid product, rather than attempting to reconstruct the full surface or assuming a uniform surface level.

The present inventor has further realized that, by identifying peaks formed by the surface of the solid product and estimating the height of each identified peak over a reference level, it becomes possible to estimate the volume of solid product associated with each peak using the measured distances in directions not occluded by the heap associated with that peak. This peak-based evaluation allows the estimation of the total amount of solid product to be based on distinct, identifiable portions of the surface, reducing the reliance on assumptions about the overall surface shape. Distance measurements in directions that are occluded by the heap associated with a given peak, as seen from the distance measurement sensor, may be disregarded or assigned a lower weight when estimating the volume associated with that peak. As a result, the method may provide more robust and accurate volume estimations, even when parts of the surface are not directly visible from the position of the distance measurement sensor.

According to an example, the method may comprise identifying a plurality of peaks formed by the surface of the solid product, based on the plurality of distances to the surface of the solid product in different directions. By identifying multiple peaks, rather than limiting the estimation to a single peak, the method may allow for a more complete representation of the distribution of solid product within the tank, thereby providing a more accurate estimation of the total amount of solid product, particularly in cases where the solid product forms several separate heaps.

According to an example, the method may comprise estimating the height over the reference level of the tank of each peak of the plurality of peaks, based on the plurality of distances to the surface of the solid product in different directions. By estimating the height of each identified peak individually, the method may provide for a more detailed characterization of the surface topology of the solid product, thereby enabling more accurate volume estimations associated with each peak.

According to an example, the method may comprise estimating the volume of solid product associated with each peak of the plurality of peaks, based on the estimated height of the peak and the plurality of distances to the surface of the solid product in different directions. By taking into account the shape of the top of each heap, as indicated by the measured distances in different directions, the method may provide an estimation of the volume associated with each peak that takes into account differences in peak sharpness or bluntness between the different peaks. Furthermore, an indication of the shape of a peak may be obtained even if only a portion of the top of the heap is visible from the distance measurement sensor, allowing for robust volume estimation under conditions of partial visibility.

According to an example, the method may comprise estimating the volume of solid product associated with the at least one identified peak by estimating, based on the plurality of distances to the surface of the solid product in different directions, a lateral dimension of a heap of solid product associated with the peak at a known vertical distance from the peak, and estimating the volume based on the height of the peak, the lateral dimension, and the vertical distance from the peak. By considering the lateral dimension of the heap at a known vertical distance from the peak, the method may provide for an estimation of the volume associated with each peak that takes into account the width of the heap, independently of or in combination with information about the shape of the top of the heap.

According to an example, the method may comprise estimating the volume of solid product associated with the at least one identified peak by assigning, based on the plurality of distances to the surface of the solid product in different directions, a geometric model to represent a heap of solid product associated with the peak, and estimating the volume using the geometric model. By fitting a geometric model to the measured distances, the method may provide an estimation of the volume that is based on predefined assumptions about the shape of the heap, thereby enabling consistent and computationally efficient volume estimation even when only a limited portion of the heap surface is visible.

Examples of geometric models that may be used to represent the heap associated with a peak include conical shapes, elliptical profiles, or trapezoidal end-elevations. A conical model may be used when the heap is approximately symmetric around the peak, while an elliptical model may be suitable when the base of the heap is elongated. In some cases, a trapezoidal model may be used to approximate the side profiles of the heap, particularly when the slopes on different sides are not equal. Such geometric models are, *per* se, known in the art, for example from the Technical note "Method for calculating the volume of a heap of material" by M D Radford, published in The Civil Engineer in South Africa, June 1982, and may allow the volume of the heap to be estimated based on a limited set of measured distances and predefined assumptions regarding the typical shape and slope of the heap surface.

According to an example, each distance measurement operation may comprise transmitting, by the distance measurement sensor, a transmit signal towards the surface of the solid product, receiving, by the distance measurement sensor, a reflection signal resulting from reflection of the transmit signal at the surface of the solid product, the reflection signal traveling towards the distance measurement sensor in a direction associated with the distance measurement operation, and estimating the distance, in the direction associated with the distance measurement operation, to the surface of the solid product in relation to the distance measurement sensor.

Different types of distance measurement techniques may be used to perform the distance measurement operations. Examples include radar sensors, such as radar sensors with array antennas capable of providing distance measurements in a plurality of directions, and optical time-of-flight sensors, such as the FlightSense^{™} series of time-of-flight sensors from STMicroelectronics. Time-of-flight sensors may be configured to provide multiple distance measurements simultaneously across a field of view, allowing a plurality of distance measurement operations to be performed with relatively inexpensive hardware. The choice of measurement technique may be based on factors such as the required measurement range, the desired resolution, and cost considerations.

According to an example, for each distance measurement operation, the transmit signal may be transmitted towards the surface of the solid product in the direction associated with the distance measurement operation. By transmitting the signal specifically in the direction from which the reflection is expected, the method may allow for straightforward association between transmitted and received signals, which may facilitate distance estimation using simple signal processing techniques and reduce the influence of unwanted reflections from other directions.

According to an example, the method may comprise providing a representation of the estimated amount of solid product in the tank, the representation comprising a total volume of solid product in the tank, a weighted height average for each identified peak, or a height of a peak having a largest associated volume of solid product. Different types of representations may be selected based on the topography of the surface of the solid product and the type of information that is most useful to the operator. For example, a true volume representation may provide a level corresponding to a flat surface equivalent, a weighted height average may be calculated by weighting the height of each identified peak based on its estimated associated volume, and a largest peak height may offer an easily interpretable level indication corresponding to the most dominant heap.

According to a second aspect of the present invention, it is provided an amount estimation system for estimating an amount of solid product in a tank, the amount estimation system comprising a distance measurement arrangement including a distance measurement sensor and a sensor controller, and a system controller, the system controller being configured to control the distance measurement arrangement to perform a plurality of distance measurement operations for measuring a plurality of distances to a surface of the solid product in different directions in relation to the distance measurement sensor, identify, based on the plurality of distances to the surface of the solid product in different directions, at least one peak formed by the surface of the solid product, estimate, based on the plurality of distances to the surface of the solid product in different directions, a height over a reference level of the tank of the at least one identified peak, estimate, based on the height of the at least one identified peak and the plurality of distances to the surface of the solid product in different directions, a volume of solid product associated with the at least one identified peak, and estimate the amount of solid product in the tank based on the volume of solid product associated with each identified peak. Examples and effects of the present second aspect of the invention are analogous to those described above with reference to the first aspect of the invention.

### Brief Description of the Drawings

These and other aspects of the present invention will now be described in more detail, with reference to the appended drawings showing examples of the invention, wherein:
Fig. 1 schematically illustrates an amount estimation system according to an example, installed at a tank containing a solid product;
Fig. 2 is a schematic block diagram of the amount estimation system in Fig. 1;
Fig. 3 is a flow chart of a method according to an example;
Fig. 4 is a schematic view of an exemplary heap as seen from the distance measurement sensor;
Fig. 5 is another schematic view of the exemplary heap in Fig. 4; and
Figs. 6A and 6B are schematic illustrations of a volume estimation for an exemplary heap.

### Detailed Description of Example Embodiments of the Invention

The present invention will now be described more fully hereinafter with reference to the accompanying drawings, in which example embodiments of the present invention are shown. The present invention may, however, be embodied in many different forms and should not be construed as limited to the embodiments set forth herein; rather, these embodiments are provided for thoroughness and completeness, and fully convey the scope of the present invention to the skilled person. Like reference characters refer to like elements throughout the figures.

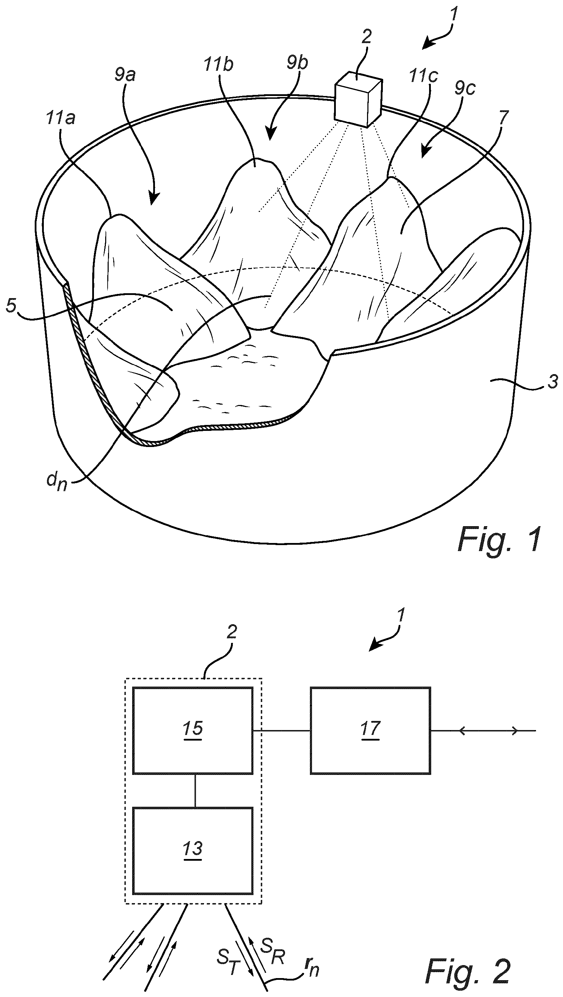

Fig. 1 schematically illustrates an amount estimation system 1 according to an example of the present invention, installed at a tank 3 containing a solid product 5. The amount estimation system 1 comprises a distance measurement arrangement 2 controllable to perform a plurality of distance measurement operations for measuring a plurality of distances dn to a surface 7 of the solid product 5. As is schematically illustrated, the surface 7 of the solid product 5 may be irregular and form one or more heaps 9a-c, with respective peaks 11a-c, inside the tank 3. Such heaps may arise depending on how the solid product 5 is filled into or discharged from the tank 3, and may vary over time due to the flow properties and accumulation behavior of the material. In particular, the solid product 5 may form several peaks of different heights rather than a flat or uniformly inclined surface, making accurate estimation of the amount of solid product 5 more challenging.

Fig. 2 is a schematic block diagram of the amount estimation system 1 of Fig. 1. The amount estimation system 1 comprises a distance measurement arrangement 2, including a distance measurement sensor 13 and a sensor controller 15, and a system controller 17. The sensor controller 15 is configured to control the operation of the distance measurement sensor 13. The system controller 17 is configured to control the distance measurement arrangement 2, and may be arranged at the tank 3 or at a remote location.

The system controller 17 is configured to control the distance measurement arrangement 2 to perform a plurality of distance measurement operations for measuring a plurality of distances dₙ to the surface 7 of the solid product 5 in different directions **rₙ** in relation to the distance measurement sensor 13. Each distance measurement operation may involve transmitting a transmit signal S_{T} towards the surface 7 of the solid product 5 in a direction **rₙ** and receiving a reflection signal S_{R} resulting from reflection of the transmit signal ST at the surface 7. Alternatively, a wide angle transmit signal S_{T} may be transmitted, and reflections may be selectively received and evaluated for different directions **rₙ.** Based on the received reflection signals S_{R}, the distance dₙ to the surface 7 may be estimated for each direction **rₙ.** In Fig. 2, the directions **rₙ** associated with the distance measurement operations are schematically indicated, while the estimated distances dₙ are illustrated in Fig. 1.

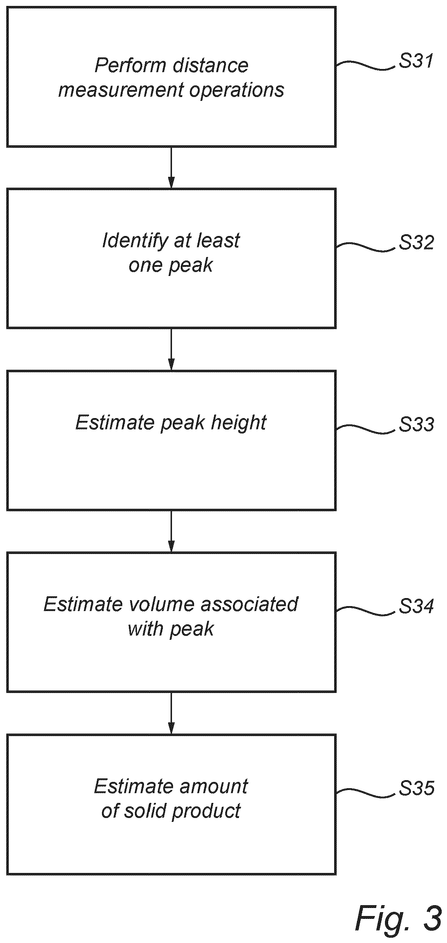

Fig. 3 is a flow chart illustrating an example of a method for estimating an amount of solid product 5 in a tank 3. Referring to Fig. 3, a plurality of distance measurement operations are first performed S31 for measuring a plurality of distances dₙ to a surface 7 of the solid product 5 in different directions **rₙ** in relation to a distance measurement sensor 13.

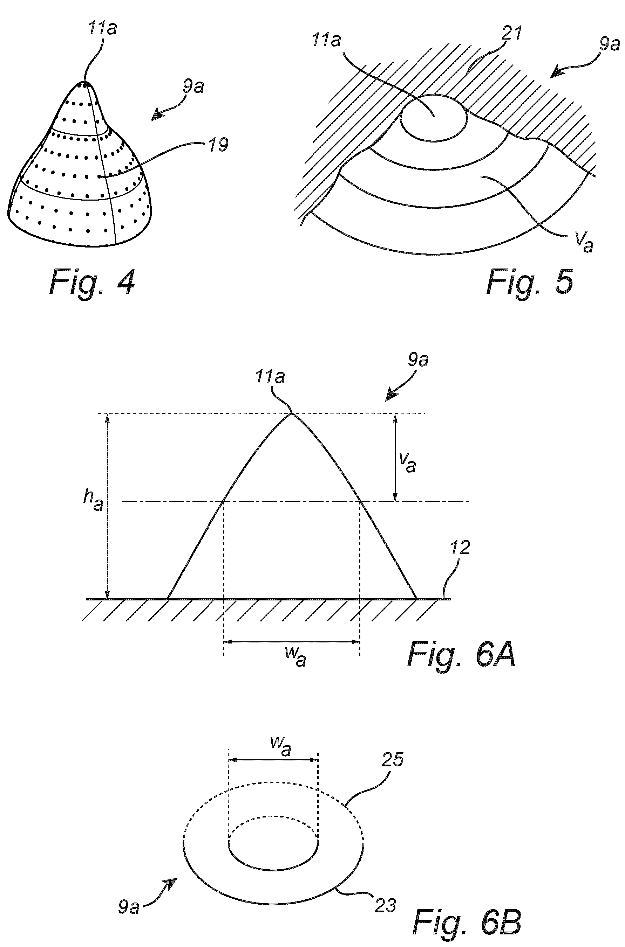

Fig. 4 schematically illustrates an example of a heap 9a of solid product 5 formed inside the tank 3, as seen from the distance measurement sensor 13 comprised in the distance measurement arrangement 2. A peak 11a is formed at the top of the heap 9a. On the heap 9a in Fig. 4 are illustrated exemplary measurement points 19 on the surface of the heap 9a to which the above-mentioned distances dₙ may be measured. The spacing between the measurement points 19 may depend on the capabilities of the distance measurement arrangement 2. A smaller spacing may provide increased precision, but may require more computational power.

Referring again to Fig. 3, the method continues with identifying S32, based on the plurality of distances dₙ to the surface 7 of the solid product 5 in different directions **rₙ,** at least one peak 11a-c formed by the surface 7 of the solid product 5. The identification of peaks 11a-c may be based on analyzing the distances dₙ in combination with the associated directions **rₙ** to detect local height maxima in the surface 7 as viewed from the distance measurement sensor 13, which is comprised in the distance measurement arrangement 2.

The method continues with estimating S33, based on the plurality of distances dₙ to the surface 7 of the solid product 5 in different directions **rₙ,** a height hₐ-h_{c} over a reference level 12 of the tank 3 of the at least one identified peak 11a-c. The reference level 12 may, for example, correspond to a known level at the bottom of the tank 3.

Thereafter, a volume Vₐ-V_{c} of solid product 5 associated with the at least one identified peak 11a-c is estimated S34, based on the height hₐ-h_{c} of the at least one identified peak 11a-c and the plurality of distances dₙ to the surface 7 of the solid product 5 in different directions **rₙ.**

Fig. 5 schematically illustrates the exemplary heap 9a of Fig. 4 from another perspective, in which a portion 21 of the heap 9a that is invisible to the distance measurement arrangement 2 can be seen. As illustrated, depending on the location of the heap 9a in relation to the distance measurement arrangement 2, the volume Vₐ of solid product 5 associated with the peak 11a of the heap 9a may be estimated based on the measured distances dₙ to the accessible measurement point 19, and on assumptions about obscured portions of the heap 9a. The portion 21 corresponds to the shadow side of the heap 9a that cannot be directly measured by the distance measurement arrangement 2.

Figs. 6A and 6B schematically illustrate volume estimation for the exemplary heap 9a. Fig. 6A is a schematic side view of the heap 9a, showing the height hₐ of the peak 11a, a vertical distance vₐ from the peak 11a, and a lateral dimension wₐ of the heap 9a at the vertical distance vₐ from the peak 11a. The reference level 12 is also indicated in Fig. 6A. Fig. 6B is a schematic top view of the heap 9a, showing the lateral dimension wₐ. In Fig. 6B, a known portion 23 of the contour of the heap 9a at the vertical distance vₐ is indicated by a solid line, the known portion 23 being determined based on the distance measurements to the measurement points 19 shown in Fig. 4. An assumed portion 25 of the contour of the heap 9a at the vertical distance vₐ is indicated by a dashed line.

An example of estimating the volume Vₐ of the heap 9a may involve determining the area enclosed by the known portion 23 and the assumed portion 25 of the contour at the vertical distance vₐ, and using this area in combination with the estimated height hₐ of the peak 11a. For example, the volume Vₐ may be estimated by assuming that the cross-sectional area of the heap 9a varies linearly from the peak 11a to the base defined by the contour at the vertical distance vₐ, and applying a prismoidal formula or a trapezoidal approximation. In this manner, the volume Va may be calculated using the lateral dimension wₐ and the height hₐ of the heap 9a, with the contribution of the invisible portion 21 of the heap 9a accounted for based on the assumed portion 25 of the contour.

It should be understood that other suitable methods for estimating the volume Vₐ of the heap 9a may also be used, depending on the available measurement data and the assumed shape of the heap. For example, geometric models such as cones, ellipsoids, or trapezoidal solids may be fitted to the measured and assumed data points to provide an estimation of the volume.

The method continues with estimating S35 the amount of solid product 5 in the tank 3 based on the volume Vₐ-V_{c} of solid product 5 associated with each identified peak 11a-c. Different approaches may be used to provide the estimated amount of solid product 5. In some examples, the estimated amount may correspond to a total volume of solid product 5 in the tank 3. In other examples, the estimated amount may be based on a weighted height average of the identified peaks 11a-c, each peak height being weighted based on the associated estimated volume Vₐ-V_{c}. In yet other examples, the estimated amount may correspond to the height of the peak 11a-c having the largest associated estimated volume Vₐ-V_{c}. The estimated amount of solid product 5 may be provided to a user, for example by display at a local or remote location, transmitted to a supervisory system, or stored for further processing or record-keeping.

It will be appreciated that many variations and modifications of the embodiments described above are possible. For example, the layout and number of distance measurement directions, the manner in which peaks are identified, the method of estimating volumes based on partial surface data, and the type of distance measurement sensor and controller used may be adapted based on application requirements. The invention is not limited to the specific examples shown, but may be embodied in a variety of forms within the scope of the appended claims.

## Claims

1. A method of estimating an amount of solid product (5) in a tank (3), comprising:
performing (S31) a plurality of distance measurement operations for measuring a plurality of distances (dₙ) to a surface (7) of the solid product (5) in different directions **(rₙ)** in relation to a distance measurement sensor (13);
identifying (S32), based on the plurality of distances (dₙ) to the surface (7) of the solid product (5) in different directions **(rₙ),** at least one peak (11a-c) formed by the surface (7) of the solid product (5);
estimating (S33), based on the plurality of distances (dₙ) to the surface (7) of the solid product (5) in different directions **(rₙ),** a height (hₐ-h_{c}) over a reference level (12) of the tank (3) of the at least one identified peak (11a-c);
estimating (S34), based on the height (hₐ-h_{c}) of the at least one identified peak (11a-c) and the plurality of distances (dₙ) to the surface (7) of the solid product (5) in different directions **(rₙ),** a volume (Vₐ-V_{c}) of solid product (5) associated with the at least one identified peak (11a-c); and
estimating (S35) the amount of solid product (5) in the tank (3) based on the volume (Vₐ-V_{c}) of solid product (5) associated with each identified peak (11a-c).

2. The method of claim 1, comprising identifying a plurality of peaks (11a-c) formed by the surface (7) of the solid product (5), based on the plurality of distances (dₙ) to the surface (7) of the solid product (5) in different directions **(rₙ).**

3. The method of claim 2, comprising estimating the height (hₐ-h_{c}) over the reference level (12) of the tank (3) of each peak (11a-c) of the plurality of peaks, based on the plurality of distances (dₙ) to the surface (7) of the solid product (5) in different directions **(rₙ).**

4. The method of claim 3, comprising estimating the volume of solid product associated with each peak of the plurality of peaks, based on the estimated height of the peak and the plurality of distances to the surface of the solid product in different directions.

5. The method of any of the preceding claims, estimating the volume (Vₐ-V_{c}) of solid product (5) associated with the at least one identified peak (11a-c) comprising:
estimating, based on the plurality of distances (dₙ) to the surface (7) of the solid product (5) in different directions **(rₙ),** a lateral dimension (w_{a-c}) of a heap (9a-c) of solid product (5) associated with the at least one identified peak (11a-c) at a vertical distance (v_{a-c}) from the peak (11a-c); and
estimating the volume (Vₐ-V_{c}) of solid product (5) associated with the at least one identified peak (11a-c) based on the height (ha-hc) of the at least one peak (11a-c), the lateral dimension (w_{a-c}), and the vertical distance (va-c) from the peak (11a-c).

6. The method of any of the preceding claims, estimating the volume (Vₐ-V_{c}) of solid product associated with the at least one identified peak (11a-c) comprising:
assigning, based on the plurality of distances (dₙ) to the surface (7) of the solid product (5) in different directions **(rₙ),** a geometric model to represent a heap (9a-c) of solid product (5) associated with the at least one identified peak (11a-c); and
estimating the volume (Vₐ-V_{c}) of solid product (5) associated with the at least one identified peak (11a-c) using the geometrical model.

7. The method of any of the preceding claims, each distance measurement operation of the plurality of distance measurement operations involving:
transmitting, by the distance measurement sensor (13), a transmit signal towards the surface (7) of the solid product (5);
receiving, by the distance measurement sensor (13), a reflection signal resulting from reflection of the transmit signal at the surface (7) of the solid product (5), the reflection signal traveling towards the distance measurement sensor in a direction **(rₙ)** associated with the distance measurement operation; and
estimating the distance (dₙ), in the direction **(rₙ)** associated with the distance measurement operation, to the surface (7) of the solid product (5) in relation to the distance measurement sensor (13).

8. The method of claim 7, wherein, for each distance measurement operation of the plurality of measurement operations, the transmit signal is transmitted towards the surface (7) of the solid product (5) in the direction **(rₙ)** associated with the distance measurement operation.

9. The method of any of the preceding claims, comprising:
providing a representation of the estimated amount of solid product (5) in the tank (3), the representation comprising a total volume of solid product (5) in the tank (3), or a weighted height average for each identified peak (11a-c), or a height of a peak having a largest associated volume of solid product (5).

10. An amount estimation system (1), for estimating an amount of solid product (5) in a tank (3), the amount estimation system (1) comprising:
a distance measurement arrangement (2) including a distance measurement sensor (13) and a sensor controller (15); and
a system controller (17), the system controller (17) being configured to:
control the distance measurement arrangement (2) to perform a plurality of distance measurement operations for measuring a plurality of distances (dₙ) to a surface (7) of the solid product (5) in different directions **(rₙ)** in relation to the distance measurement sensor (13) of the distance measurement arrangement (2);
identify, based on the plurality of distances (dₙ) to the surface (7) of the solid product (5) in different directions **(rₙ),** at least one peak (11a-c) formed by the surface (7) of the solid product (5);
estimate, based on the plurality of distances (dₙ) to the surface (7) of the solid product (5) in different directions **(rₙ),** a height (hₐ-h_{c}) over a reference level (12) of the tank (3) of the at least one identified peak (11a-c);
estimate, based on the height (hₐ-h_{c}) of the at least one identified peak (11a-c) and the plurality of distances (dₙ) to the surface (7) of the solid product (5) in different directions **(rₙ),** a volume (Vₐ-V_{c}) of solid product (5) associated with the at least one identified peak (11a-c); and
estimate the amount of solid product (5) in the tank (3) based on the volume (Vₐ-V_{c}) of solid product (5) associated with each identified peak (11a-c).

11. The amount estimation system (1) of claim 10, the system controller (17) being configured to:
identify a plurality of peaks (11a-c) formed by the surface (7) of the solid product (5), based on the plurality of distances (dₙ) to the surface (7) of the solid product (5) in different directions **(rₙ);**
estimate the height (hₐ-h_{c}) over the reference level (12) of the tank (3) of each peak (11a-c) of the plurality of peaks, based on the plurality of distances (dₙ) to the surface (7) of the solid product (5) in different directions **(rₙ);** and
estimate the volume (Vₐ-V_{c}) of solid product (5) associated with each peak (11a-c) of the plurality of peaks, based on the estimated height (hₐ-h_{c}) of the peak (11a-c) and the plurality of distances (dₙ) to the surface (7) of the solid product (5) in different directions **(rₙ).**

12. The amount estimation system (1) of claim 10 or 11, the system controller (17) being configured to:
estimate, based on the plurality of distances (dₙ) to the surface (7) of the solid product (5) in different directions **(rₙ),** a lateral dimension (w_{a-c}) of a heap (9a-c) of solid product (5) associated with the at least one identified peak (11a-c) at a vertical distance (v_{a-c}) from the peak (11a-c); and
estimate the volume (Vₐ-V_{c}) of solid product (5) associated with the at least one identified peak (11a-c) based on the height (hₐ-h_{c}) of the at least one peak (11a-c), the lateral dimension (w_{a-c}), and the vertical distance (v_{a-c}) from the peak (11a-c).

13. The amount estimation system (1) of any of claims 10 to 12, the system controller (17) being configured to:
assign, based on the plurality of distances (dₙ) to the surface (7) of the solid product (5) in different directions **(rₙ),** a geometric model to represent a heap (9a-c) of solid product (5) associated with the at least one identified peak (11a-c); and
estimate the volume (Vₐ-V_{c}) of solid product (5) associated with the at least one identified peak (11a-c) using the geometrical model.

14. The amount estimation system (1) of any of claims 10 to 13, the system controller (17) being configured to, for each distance measurement operation of the plurality of distance measurement operations, control the distance measurement arrangement (2) to:
transmit, by the distance measurement sensor (13), a transmit signal towards the surface (7) of the solid product (5);
receive, by the distance measurement sensor (13), a reflection signal resulting from reflection of the transmit signal at the surface (7) of the solid product (5), the reflection signal traveling towards the distance measurement sensor (13) in a direction associated with the distance measurement operation; and
estimate a distance (dₙ), in the direction **(rₙ)** associated with the distance measurement operation, to the surface (7) of the solid product (5) in relation to the distance measurement sensor (13).

15. The amount estimation system (1) of any of claims 10 to 14, the system controller (17) being configured to:
provide a representation of the estimated amount of solid product (5) in the tank (3), the representation comprising a total volume of solid product (5) in the tank (3), or a weighted height average for each identified peak (11a-c), or a height of a peak having a largest associated volume of solid product (5).
